# EUROPÄISCHE PATENTSCHRIFT

(11) **EP 0 579 080 B1**
(45) Veröffentlichungstag und Bekanntmachung des Hinweises auf die Patenterteilung: **23.04.1997**
(21) Anmeldenummer: 93110702.3
(22) Anmeldetag: 05.07.1993
(51) Int. Cl.: C08G 18/28, C08K 13/00

(54) **Lagerstabile, Formtrennmittel enthaltende Polyolgemische**
Storage-stable, mould release agents-containing polyol compositions
Compositions de polyols stables au stockage contenant des agents de démoulage

(30) Priorität: 17.07.1992 DE 4223597
(43) Veröffentlichungstag der Anmeldung: 19.01.1994
(73) Patentinhaber: BAYER AG, 51368 Leverkusen (DE)
(72) Erfinder: Knipp, Ulrich, Dr., D-51467 Bergisch Gladbach (DE); von Bonin, Wulf, Dr., D-51519 Odenthal (DE); Neuhaus, Alfred, D-51371 Leverkusen (DE)

(56) Entgegenhaltungen:
- EP-A- 0 153 639
- EP-A- 0 275 907
- EP-A- 0 490 342
- DE-A- 2 307 589
- DE-A- 3 443 341
- DE-A- 3 821 908

## Beschreibung

Die Erfindung betrifft Polyolgemische, die innere Formtrennmittelgemische und gegebenenfalls weitere Hilfsmittel enthalten.

Die Herstellung von harten, halbharten und flexiblen Polyurethanwerkstoffen wird vielfach so vorgenommen, daß eine Polyolmischung mit Polyisocyanaten maschinell gemischt und in eine Form eingespritzt wird, in der dann die Aushärtung der abreagierenden Reaktionsmischung, gegebenenfalls unter Ausbildung von Schichten unterschiedlicher Dichte, erfolgt. Die Form kann aus verschiedensten Materialien (wie z.B. Stahl, Aluminium oder Epoxydharz) bestehen und beheizt oder unbeheizt sein.

Zur besseren Entformbarkeit des so aus der Reaktionsmischung gebildeten Werkstücks verwendet man sogenannte äußere Trennmittel oder Trennlacke, die in die Form eingespritzt werden, oder sogenannte innere Trennmittel, die der Reaktionsmischung einverleibt werden und unter Verzicht auf äußere Trennmittel zu einer guten Entformbarkeit des gebildeten Werkstücks (Formteils) führen. Solche inneren Trennmittel können der Isocyanatkomponente der Reaktionsmischung oder vorzugsweise der Polyolkomponente der Reaktionsmischung oder beiden Komponenten zugesetzt werden, bevor sie in der Mischvorrichtung vereinigt werden.

Innere Trennmittel sind vielfach Produkte, die aliphatische Paraffinketten enthalten, wobei diese zumeist mehr als 10 C-Atome enthalten sollen. Vorzugsweise verwendet man Reaktionsprodukte oder Abkömmlinge langkettiger Fettsäuren, insbesonders natürlicher Fettsäuren, wie etwa Ölsäure, Tallöl-Fettsäure, Stearinsäure, Palmkernfettsäuren, Tranfettsäuren, Rizinolsäuren, Linolsäuren, Erucasäuren bzw. deren Gemische.

Prinzipiell verwendbare Abkömmlinge bzw. Reaktionsprodukte solcher Fettsäuren sind deren Hydrierungs- oder Reduktionsprodukte, deren Veresterungs- oder Amidierungsprodukte, Salze, Urethane oder Ester solcher Veresterungs- bzw. Amidierungsprodukte, Aminsalze solcher Fettsäuren oder Anlagerungsprodukte, z.B. an Carbodiimide oder im Rahmen von Passerini- oder Ugi- Vielzentrenreaktionen.

Unter den inneren Trennmitteln haben sich im Laufe der Zeit zwei Typen als besonders wirksam erwiesen, nämlich die Typen, die NH-Funktionen enthalten, sei es durch Amid- oder Urethanbindungen im Molekül oder solche Typen, die Aminsalzfunktionen enthalten, wobei letztere gegebenenfalls selbst wiederum auch Amidfunktionen aufweisen können. Beide Grundtypen können weiterhin auch über Estergruppen verfügen.

Von den salzartigen Typen seien z.B. das Ölsäuresalz des Amids aus 1 Mol N-Dimethylpropylendiamin-1,3 und Ölsäure oder des Esters aus 1 Mol N-Dimethylethanolamin und Ölsäure genannt. Von den -NH-Funktionen aufweisenden, nicht salzartigen Typen innerer Trennmittel seien z.B. das Umsetzungsprodukt von Diisocyanatodiphenylmethan-Typen (d.h. Polyisocyanaten) mit dem Ester aus z.B. 1 Mol Pentaerythrith und 2 bis 3 Mol Ölsäure, oder auch das Ölsäureamid aus 1 Mol Ölsäure und dem Ölsäureester des Ethanolamins genannt.

Urethan- oder Estergruppen aufweisende, nicht salzartige Trennmittel sind, wie auch die Salzgruppen aufweisenden Trennmittel, besonders gut als innere Trennmittel verwendbar.

Die für die eingangs genannte Formteilherstellung aus Polyol- und Polyisocyanatgemischen verwendeten Polyolgemische enthalten vielfach kurzkettige Polyole, d.h. auf Basis von Polyalkoholen und/oder (Poly)Aminen durch Alkoxylierung bis zu OH-Zahlen über 700 hergestellte Polyole, sowie mittellang-kettige Polyole, d.h. gleichermaßen, aber durch ausgiebigere Alkoxylierung bis zu OH-Zahlen zwischen ca. 100 und 700, umgesetzte Produkte, sowie auf prinzipiell gleicher Basis aber bis zu OH-Zahlen zwischen 8 und 100 umgesetzte Produkte (sogenannte langkettige Polyole).

Natürlich kommen auch durch die genannten OH-Zahl-Bereiche gekennzeichnete, kurz-, mittel- oder langkettige Polyole andersartiger Herstellungsweise in Betracht, seien es Polyester, Polyamide, Polyurethane, nicht weiter modifizierte, primär zugängliche Polyole, wie etwa Glycerin, Zuckerprodukte, Formosen u.a., oder auch sogenannte Polymerpolyole, Füllstoff-haltige Polyole, sogenannte PHD-Polyole oder sonstige Polyisocyanatumsetzungsprodukte in stabiler Dispersion enthaltende Polyole und Polyolgemische.

Außerdem enthalten solche Polyolgemische häufig noch weitere spezielle Porenstabilisatoren, gegebenenfalls Oxidations- oder Strahlungsstabilisatoren, Farbgeber, Duft- oder sonstige Wirkstoffe sowie geringe Anteile an Wasser und gegebenenfalls zusätzliche Treibmittel.

Aus der DE-OS 1 953 637 ist ein Verfahren zur Herstellung von Schaumstoffen durch Aufschäumung eines Reaktionsgemisches aus Polyisocyanaten, Verbindungen mit reaktionsfähigen Wasserstoffatomen, Wasser und/oder organischen Treibmitteln sowie Zusatzstoffen in geschlossenen Formen bekannt. Als Zusatzstoffe werden mindestens 25 aliphatische Kohlenstoffatome aufweisende Salze von aliphatischen Carbonsäuren und primären Aminen oder Amid- und/oder Estergruppen aufweisenden Aminen verwendet.

In der DE-OS 2 307 589 wird ein Verfahren zur Herstellung von Schaumstoffen auf Basis von Polyisocyanaten beschrieben, bei dem unter Mitverwendung von Umsetzungsprodukten aus Fettsäureestern und Polyisocyanaten und gegebenenfalls weiterer Trennmittel, wie Ölsäure- oder Tallölfettsäuresalze des amidgruppenhaltigen Amines, das durch Umsetzung von N-Dimethylaminopropylamin mit Ölsäure oder Tallölfettsäure zugänglich ist, die Schaumstoffe in geschlossenen Formen hergestellt werden.

Im Verfahren gemäß DE-OS 2 121 670 werden die Schaumstofformteile unter Verwendung von Gemischen aus mindestens zwei der folgenden Komponenten hergestellt:
a) Salzen von aliphatischen Carbonsäuren und gegebenenfalls Amid- und/oder Estergruppen aufweisenden Aminen,
b) COOH- und/oder OH-Gruppen aufweisenden Estern von mono- und/oder polyfunktionellen Carbonsäuren,
c) natürlichen und/oder synthetischen Ölen, Fetten oder Wachsen.

Es hat sich nun gezeigt, daß insbesonders die hochwirksamen inneren Trennmittel der vorbeschriebenen Art, z.B. die Urethan-NH-Gruppen enthaltenden Trennmittel dann, wenn man sie in den für eine gute Entformung notwendigen größeren Mengen den Polyolgemischen zusetzt, dazu neigen, instabile Mischungen zu ergeben und "auszuschwimmen".

Es ist auch bekannt, Gemische mehrerer Trennmittel als inneres Trennmittel bei der Formteilherstellung, gegebenenfalls sogar in Polyol- und Polyisocyanatphase verteilt, einzusetzen, wenn man besonders gute Trennwirkungen erzielen will.

Allen Systemen haftet jedoch der Nachteil an, daß man mit ihnen keine stabilen, d.h. über längere Zeiten, wie sie bei Transport und Lagerung von Polyurethan-Rohstoffen üblich sind, lagerfähigen Zubereitungen aus den bei der Formteilherstellung üblichen Polyolgemischen und den mit diesen Polyolgemischen vielfach weitgehend unverträglichen inneren Trennmitteln herstellen kann, insbesondere dann, wenn die Trennmittel in Mengen über 5 % zugesetzt werden.

Aufgabe war es daher, innere Trennmittel enthaltende Polyolgemische zur Verfügung zu stellen, die stabil, d.h. über längere Zeit lagerfähig, sind und eine gute Trennwirkung aufweisen.

Diese Aufgabe konnte mit den erfindungsgemäßen Abmischungen aus Polyolgemischen und Trennmittelgemischen gelöst werden.

Gegenstand der Erfindung sind innere Formtrennmittelgemische enthaltende Polyolgemische, die dadurch gekennzeichnet sind, daß sie im wesentlichen
55 bis 95 Gew.-% eines Polyolgemisches a) bestehend aus
a1) 30 bis 70 Gew.-% eines Polyols mit einer OH-Zahl > 700 und
a2) 70 bis 30 Gew.-% eines Polyols mit einer OH-Zahl ≤ 700
und 5 bis 45 Gew.-% eines Formtrennmittelgemisches b) bestehend aus
b1) 60 bis 95 Gew.-% salzartigen Trennmitteln aus den unten genannten Komponenten und
b2) 5 bis 40 Gew.-% Trennmitteln mit Amid- oder Urethan-NH-Funktionen ohne Salzcharakter wie unten beschrieben
und gegebenenfalls weitere Hilfsmittel c) enthalten.

Bevorzugt bestehen die Polyolgemische a) aus
a1) 40 bis 65 Gew.-% eines Polyols mit einer OH-Zahl > 700 und
a2) 60 bis 35 Gew.-% eines Polyols mit einer OH-Zahl ≤ 700
und die Formtrennmittelgemische b) aus
b1) 70 bis 90 Gew.-% salzartigen Trennmitteln aus den unten genannten Komponenten und
b2) 10 bis 30 Gew.-% Trennmitteln mit Amid- oder Urethan-NH-Funktionen ohne Salzcharakter wie unten beschrieben.

Die Polyolgemische enthalten vorzugsweise 70 bis 88 Gew.-% Polyolgemische a) und 12 bis 30 Gew.-% innere Formtrennmittelgemische b) und gegebenenfalls weitere Hilfsmittel c).

Als Hilfsmittel c) werden bevorzugt Wasser, Stabilisatoren, Katalysatoren usw. eingesetzt.

Die erfindungsgemäßen, innere Formtrennmittelgemische enthaltenden Polyolgemische werden zusammen mit Polyisocyanaten bei der Herstellung von Polyurethankunststoffen in Reaktionsspritzguß-Formteil-Herstellungsverfahren verwendet.

Vorteilhafterweise enthalten die erfindungsgemäßen, stabilen Mischungen die inneren Trennmittel in größeren Mengen und zusätzlich Stabilisatoren und sonstige Zusatzstoffe.

Die Polyolgemische mit OH-Zahlen ≤ 700 können sogenannte mittelkettige Polyole und/oder sogenannte langkettige Polyole enthalten.

Das Trennmittelgemisch wird dem Polyolgemisch, das als Reaktionskomponente mit der Polyisocyanatkomponente bei der Formteilherstellung durch Vermischen dieser beiden Komponenten dienen soll, vor der Vermischung mit der Isocyanatkomponente in einer Menge von 5 bis 45 Gew.-%, vorzugsweise 12 bis 30 Gew.-%, bezogen auf Gesamtgemisch, zugesetzt.

Es hat sich gezeigt, daß nur in dem erfindungsgemäßen Bereich des Parameterfeldes aus Salzgruppen enthaltenden, inneren Trennmitteln und Amid- oder Urethan-NH-Funktionen enthaltenden, inneren Trennmitteln ohne Salzfunktionen sowie den verwendeten Gemischen von Polyolen kurzkettiger und längerkettiger Art eine stabile, d.h. nicht zur Separierung zusammenhängender, unterschiedlicher Phasen neigende Mischung herstellbar ist, die reproduzierbar gute Trennwirkungen aufweist und zu keiner Störung der ablaufenden Formteilherstellung und zu keiner Eigenschaftsverschlechterung der erhaltenen Formteile Anlaß gibt.

Die erfindungsgemäße Polyolmischung kann eine stabile, klare Lösung aber auch eine stabile, nicht zur Entmischung neigende Dispersion, Emulsion oder Trübung darstellen.

Vorteilhafterweise enthalten die Polyolgemische sowohl neutrale, wie auch basische Polyoltypen.

Die Polyolkomponente a2) besteht bevorzugt aus 25 bis 75 Gew.-% aus Polyolen mit OH-Zahlen zwischen 100 und 700 und 25 bis 75 Gew.-% aus Polyolen mit OH-Zahlen unter 100.

Salzartige innere Trennmittel enthalten zusätzlich -CONH- oder -COOR-Funktionen und stellen Salze von Fettsäuren mit mehr als 10 C-Atomen dar, während die mit diesem Typ salzartiger, innerer Trennmittel zu kombinierenden, inneren Trennmittel des Typs ohne salzartige Funktionen -CONH-Funktionen aufweisen und im Molekül einen oder mehrere Reste -COR aufweisen, wobei sich die Gruppierung -COR von Fettsäuren mit mehr als 10 C-Atomen ableitet.

Vorteilhafterweise stellen die vorgenannten Fettsäuren mit mehr als 10 C-Atomen bei Raumtemperatur flüssige, insbesondere natürliche Fettsäuren dar.

Es handelt sich bei den vorgenannten Polyolgemischen bevorzugt um Polyetherpolyole, die gemäß dem Stande der Technik durch Alkoxylierung von sauren, neutralen oder basischen Startern mit Ethylenoxid und/oder Propylenoxid hergestellt werden und in denen die Alkoxylierungsmittel im Gemisch blockweise oder in alternierenden Anordnungen eingebaut sind.

Bei den erfindungsgemäß zu verwendenden Typen innerer Trennmittel mit Salz-Charakter handelt es sich um Fettsäuresalze der Fettsäureamide aus Fettsäure und N-Dimethyl-propylendiamin-1,3 und bei den zu verwendenden Typen innerer Trennmittel ohne Salzcharakter um Umsetzungsprodukte von Polyisocyanaten mit den Estern aus 1 Mol Pentaerythrith und 3 Mol Fettsäure, wobei als Fettsäure Ölsäure und/oder Tallölfettsäure Verwendung finden.

Die zur Formteilherstellung verwendeten Polyolkomponenten sowie die Polyisocyanatkomponenten entsprechen in ihrem konventionellen Aufbau dem Stande der Technik und sind dem Fachmann geläufig. Prinzipiell gilt dies auch für die erfindungsgemäß verwendeten einzelnen Typen von inneren Trennmitteln, seien es solche mit salzartigem Charakter oder solche, die keinen salzartigen Charakter haben.

Die entsprechenden Herstellungs- oder Mischtechniken sowie die Mitverwendung von weiteren, üblichen Hilfsmitteln und Zusatzstoffen sind dem Fachmann geläufig.

Zu den salzartigen Trennmitteln wären neben den bereits genannten Typen auch noch z.B. Salze aus Fettaminen, wie Octylamin, Oleylamin, Dodecylamin, durch Reduktion von Fettsäureamiden erhältliche Amine oder aus Alkoxylierung von Ammoniak oder prim. und/oder sek. aliphatischen oder aromatischen Aminen zugängliche basische Aminabkömmlinge, Fettsäureester solcher Alkoxylierungsprodukte, z.B, N-Dimethylethanolamin, N-Methyldiethanolamin oder Tetraethoxy- bzw. Tetrapropoxyethylendiamin oder Amidamine, wie Amidamine aus Fettsäuren und N-Methyldiethylentriamin oder N-Dimethylethylendiamin oder Triethylentetramin, wobei zur Salzbildung vorzugsweise Ölsäure oder Tallölfettsäuren, Tranfettsäuren und andere, bei Raumtemperatur flüssige Fettsäuren zum Einsatz kommen, zu zählen.

Zu den mit den obigen zu kombinierenden, nicht salzartigen Trennmitteln wären neben den bereits genannten Typen auch zu zählen: z.B. Ester aus Fettalkoholen und Fettsäuren, Fettsäureester von ein- und mehrwertigen Alkoholen, etwa auch Fettsäureglyceride, Ester aus Fettsäuren und Aminoalkoholen, wie sie auch weiter oben beschrieben sind, oder auch Amide oder Amid-Ester, z.B. aus Ölsäure und Aminoalkoholen wie Ethanolamin, oder Urethane aus Fettsäureteilestern von mehrfunktionellen Alkoholen und Polyisocyanaten bzw. Ester aus Alkoholen und mit Fettsäuren amidierte Aminosäuren. Die nicht salzartigen Trennmitteltypen weisen im Molekül wenigstens eine -CONH-Funktion auf, wie etwa in Amiden oder Urethanen.

Der Vorteil der erfindungsgemäßen Mischungen aus Polyolen und Trennmittelgemischen, auch in relativ großen Mengen, liegt darin, daß sie innerhalb der erfindungsgemäßen Zusammensetzungen zu technisch brauchbaren Formteilen führen und gleichzeitig deren über nahezu unbeschränkt lange Produktionsfolgen einwandfreie Entformung aus den technisch üblichen Formen sicherstellen, wobei die erfindungsgemäße Polyolmischung auch über lange Transport- und Lagerzeit hinweg nicht zum Ausschwimmen der eingemischten Trennmittel neigt, sondern eine entmischungsstabile Abmischung in Form einer Lösung oder Dispersion darstellt.

Dieses führt zu einer gegenüber dem Stand der Technik verbesserten Produktionsmöglichkeit für die im Reaktionsspritzguß hergestellten Formteile, da bisher keine lagerstabilen Polyolmischungen zur Verfügung standen bzw. die bekannten Polyolmischungen zu Entmischungen führten. Bedingt dadurch mußten die Vorratstanks gerührt werden, und es waren nur sehr kurze Lager- und Transportzeiten zulässig.

Die Erfindung soll anhand der nachfolgenden Beispiele näher erläutert werden.

### Beispiele

In Versuchen wird nach 148 Stunden Lagerung bei Raumtemperatur das Stabilitätsverhalten der erfindungsgemäßen Polyolmischungen untersucht. Die angegebenen Teile und Prozente beziehen sich auf das Gewicht, sofern nichts anderen vermerkt ist.

Nach Abmischung der Komponenten mit einem Schnellmischer wurden diese in Glasflaschen mit quadratischem Querschnitt gelagert. Die Begutachtung der Phasenverhältnisse erfolgte qualitativ im durchstrahlenden Licht einer Glühbirne mit dem Auge.

Es wurde folgende Klassifizierung vorgenommen:

| | | |
|---|---|---|
| Klasse 1 | klar, einphasig | stabil |
| Klasse 2 | homogene, schwache Trübung | stabil |
| Klasse 3 | homogene, stärkere Trübung | stabil |
| Klasse 4 | schwache Trübung mit geringer Phasentrennung | instabil |
| Klasse 5 | stärkere Trübung mit Phasentrennung | instabil |
| Klasse 6 | Trennung in gut separierte Phasen | instabil |

Als salzartige Trennmittel S wurden verwendet:
- S₁:: Salz erhalten durch Umsetzung von einem Mol N-Dimethylpropylendiamin-1,3 mit 2 Mol Ölsäure in Stickstoffatmosphäre. Es entsteht unter Amidierungsbedingungen das Salz des Ölsäureamids.
- S₂:: Salz erhalten durch Umsetzung von 1 Mol N-Methyl-diethanolamin mit 3 Mol Tallölfettsäure unter Veresterungsbedingungen. Es entsteht das Estersalz.

Als nicht-salzartige Trennmittel E wurden verwendet:
- E₁:: bei ca. 80°C hergestelltes Umsetzungsprodukt aus 2 Mol Pentaerythrith-tri-ölsäureester und 1 Mol technischem Diisocyanatodiphenylmethan.
- E₂:: Amidester aus 1 Mol Ethanolamin und 2 Mol Ölsäure.

Als Polyole D wurden folgende Typen verwendet:
Kurzkettige Polyole
- D₁:: Propoxylierungsprodukt von Trimethylolpropan, OH-Zahl 1020
- D₂:: Propoxylierungsprodukt von Trimethylolpropan, OH-Zahl 860

Mittelkettige Polyole:
- D₃:: Propoxylierungsprodukt von Ethylendiamin, OH-Zahl 640
- D₄:: Ethoxylierungsprodukt von N-Ethyl-diethanolamin, OH-Zahl 470
- D₅:: Ethoxylierungsprodukt von Glycerin, OH-Zahl 250

Langkettiges Polyol:
- D₆:: Polyetherpolyol, OH-Zahl 42, auf Basis 84 % Trimethylolpropan und 16 % Propylenglykol, zunächst 5 % propoxyliert, dann mit 30 % Ethylenoxid, 40 % Propylenoxid mischpropoxyliert, dann mit 25 % Propylenoxid endpropoxyliert.

Zusatz:
- P₁:: Handelsüblicher Polyether-Polysiloxanstabilisator der Fa. Goldschmidt AG.

Aus den Trennmitteltypen S und E wurden in 10 %-Abmischungsschritten die Mischungen (M₁ bis M₄) hergestellt, z.B. Mischungsreihe M₁ aus S₁ und E₁:

| | M₁A | M₁B | M₁C | M₁D | M₁E | M₁F | M₁G | M₁H | M₁I | M₁K | M₁L |
|---|---|---|---|---|---|---|---|---|---|---|---|
| S₁% | 000 | 10 | 20 | 30 | 40 | 50 | 60 | 70 | 80 | 90 | 100 |
| E₁% | 100 | 90 | 80 | 70 | 60 | 50 | 40 | 30 | 20 | 10 | 000 |
| | | | | | | | erfindungsgemäßer Bereich | | | | |

- M₂: ist die Mischungsreihe aus S₂ und E₁
- M₃: ist die Mischungsreihe aus S₂ und E₂
- M₄: ist die Mischungsreihe aus S₂ und nicht erfindungsgemäßem -CONH-Gruppenfreiem Ester aus 2 Mol Ölsäure und 1 Mol N-Methyldiethanolamin.

Es wurden folgende Polyolmischungen (M11 bis M16) hergestellt:

| Mischung | M11 | M12 | M13 | M14 | M15 | M16 |
|---|---|---|---|---|---|---|
| Tle D₁ % | 19,93 | 19,93 | | | | |
| Tle D₂ | 29,89 | 29,89 | 29,89 | 29,89 | 29,89 | 29,89 |
| Tle D₃ | | | 19,93 | 19,93 | 19,93 | 19,93 |
| Tle D₄ | 4,53 | 4,53 | 4,53 | 4,53 | 4,53 | 4,53 |
| Tle D₅ | | 27,64 | | | | |
| Tle D₆ | 27,64 | | 27,64 | 27,64 | 27,64 | 27,64 |
| Tle Wasser | 0,40 | 0,40 | 0,40 | 0,40 | 0,40 | 0,40 |
| Tle P₁ | 1,81 | 1,81 | 1,81 | 1,81 | 1,81 | 1,81 |

Die Polyolmischungen (M11 bis M16) wurden mit Trennmittelmischungen (M₁ bis M₄) der Typen A bis L in 10 %-Schritten abgemischt, z.B. M11 mit M₁A:

| | a | b | c | d | e | f | g | h | i | k | l |
|---|---|---|---|---|---|---|---|---|---|---|---|
| M₁ A% | 00 | 10 | 20 | 30 | 40 | 50 | 60 | 70 | 80 | 90 | 100 |
| M11 % | 100 | 90 | 80 | 70 | 60 | 50 | 40 | 30 | 20 | 10 | 00 |
| | | erfindungsgemäßer Bereich | | | | | | | | | |

Die so erhaltenen Mischungen wurden, wie oben bereits beschrieben, nach 148 Stunden gemäß der angegebenen Klassifizierung beurteilt. Die Klassen 1 bis 3 sind stabil und die Klassen 4 bis 6 instabil.

Die Polyolgemische M11 bis M16 werden in Abmischung mit den Trennmittelgemischen M1 bis M4 bezüglich ihrer Stabilität anhand der vorgegebenen Klassifizierungen beurteilt.

Die Bezeichnung der zur Beurteilung anstehenden Gesamtmischung entspricht den vorgegebenen Codes. Z.B. lautet die Bezeichnung der Abmischung aus 80 % Polyolgemisch M11 und 20 % Trennmittelgemisch M₁H somit M11, M₁H;c.

| Beispiel Nr. | Mischungstyp erfindungsgemäßer Bereich | Mischungstyp nicht erfindungsgemäßer Bereich | Beurteilung Klassifizierung |
|---|---|---|---|
| 1 | M11, M₁K;b | | 2 |
| 2 | M11, M₁H;c | | 3 |
| 3 | | M11, M₁D*;c | 4 |
| 4 | M11, M₁H;d | | 3 |
| 5 | | M11, M₁H;f* | 6 |
| 6 | | M11, M₁F*;e | 5 |
| 7 | | M11, M₁F*;f* | 6 |
| 8 | M11, M₁I;d | | 2 |
| 9 | | M11, M₁F*;d | 4 |
| 10 | M12, M₁K;d | | 1 |
| 11 | | M12, M₁F*;d | 5 |
| 12 | M12, M₁I;c | | 2 |
| 13 | | M12, M₁I;f* | 6 |
| 14 | M12, M₁G;c | | 3 |
| 15 | | M12, M₁F*;c | 4 |
| 16 | M15, M₃I;b | | 1 |
| 17 | M15, M₃K;c | | 2 |
| 18 | | M15, M₃K;f* | 6 |
| 19 | | M15, M₃L*;d | 4 |
| 20 | M14, M₂K;e | | 3 |
| 21 | | M14,M₂L*;e | 6 |
| 22 | | M14, M₂F*;d | 6 |
| 23 | M14, M₂I;d | | 2 |
| 24 | M14, M₂I;b | | 2 |
| 25 | | M14, M₂F*;b | 6 |
| 26 | M13, M₁I;e | | 1 |
| 27 | | M13, M₁G;f* | 6 |
| 28 | | M13, M₁F*;e | 5 |
| 29 | M13, M₁H;d | | 2 |
| 30 | | M13, M₁F*;d | 5 |
| 31 | M13, M₁G;c | | 3 |
| 32 | | M13, M₁F*;c | 4 |
| 33 | M13, M₁K;b | | 2 |
| 34 | | M15, M*₄G;e | 6 |
| 35 | | M15, M*₄G;b | 6 |
| 36 | | M15, M*₄I;c | 6 |
| 37 | | M15, M*₄K;d | 6 |

| | | | |
|---|---|---|---|
| * außerhalb des erfindungsgemäßen Bereiches | | | |

Die Beispiele 1 bis 33 zeigen, daß im Falle der im erfindungsgemäßen Bereich eingesetzten Polyolmischungen mit den im erfindungsgemäßen Bereich eingesetzten Trennmittelgemischen im Rahmen der erfindungsgemäß angegebenen Mischungsbereiche ("Mischungstyp erfindungsgemäßer Bereich") stabile Gesamtmischungen erhalten werden, während dann, wenn einer der erfindungsgemaß angegebenen Mischungsbereiche verlassen wird ("Mischungstyp nicht erfindungsgemäßer Bereich"), instabile Gesamtmischungen (Klassifizierung 4 bis 6) erhalten werden.

Die Beispiele 34 bis 37 zeigen, daß dann, wenn nicht erfindungsgemäße Trennmittelgemische verwendet werden (z.B. solche der Trennmittel-Mischungsreihe M₄), Unverträglichkeiten bzw. mangelnde Stabilität beobachtet werden.

## Patentansprüche

1. Innere Formtrennmittelgemische enthaltende Polyolgemische, dadurch gekennzeichnet, daß sie im wesentlichen
55 bis 95 Gew.-% eines Polyolgemisches a)
bestehend aus
a1) 30 bis 70 Gew.-% eines Polyols mit einer OH-Zahl > 700 und
a2) 70 bis 30 Gew.-% eines Polyols mit einer OH-Zahl ≤ 700 und 5 bis 45 Gew.-% eines Formtrennmittelgemisches b) bestehend aus
b1) 60 bis 95 Gew.-% salzartigen Trennmitteln basierend auf Fettsäure-Salzen aus Fettsäuren mit mehr als 10 C-Atomen und N-Dimethylpropylendiamin-1,3, Octylamin, Oleylamin, Dodecylamin, N-Dimethylethanolamin, N-Methyldiethanolamin, Tetraethoxy- und Tetraoxyethylendiamin sowie Aminen aus Fettsäuren und N-Methyldiethylentriamin, N-Dimethylethylendiamin oder Triethylentetramin und
b2) 5 bis 40 Gew.-% Trennmitteln mit Amid-, oder Urethan-NH-Funktionen ohne Salzcharakter basierend auf Umsetzungsprodukte von Polyisocyanaten mit Estern aus 1 Mol Pentaerythrith und 3 Mol Ölsäure und/oder Tallölfettsäure sowie Estern aus Fettalkoholen und Fettsäuren, Fettsäureestern von ein- und mehrwertigen Alkoholen, Estern aus Fettsäuren und Aminoalkoholen
und gegebenenfalls weitere Hilfsmittel c) enthalten.

2. Polyolgemische gemäß Anspruch 1, dadurch gekennzeichnet, daß das Polyolgemisch a) aus
a1) 40 bis 65 Gew.-% eines Polyols mit einer OH-Zahl > 700 und
a2) 60 bis 35 Gew.-% eines Polyols mit einer OH-Zahl ≤ 700
und das Formtrennmittelgemisch b) aus
b1) 70 bis 90 Gew.-% salzartigen Trennmitteln gemäß Anspruch 1 und
b2) 10 bis 30 Gew.-% Trennmitteln mit Amid- oder Urethan-NH-Funktionen ohne Salzcharakter gemäß Anspruch 1
bestehen.

3. Polyolgemische gemäß Anspruch 1 oder 2, dadurch gekennzeichnet, daß sie 70 bis 88 Gew.-% eines Polyolgemisches a) und 12 bis 30 Gew.-% eines inneren Formtrennmittelgemisches b) und gegebenenfalls weitere Hilfsmittel c) enthalten.

4. Polyolgemische gemäß Anspruch 1, dadurch gekennzeichnet, daß sie als Hilfsmittel c) Wasser, Stabilisatoren, Katalysatoren usw. enthalten.

5. Verwendung der Polyolgemische nach den Ansprüchen 1 bis 4 zusammen mit Polyisocyanaten bei der Herstellung von Polyurethankunststoffen in Reaktionsspritzguß-Formteil-Herstellungsverfahren.

## Claims

1. Polyol mixtures containing mixtures of internal mould release agents, characterised in that they substantially contain
from 55 to 95 wt.% of a polyol mixture a)
consisting of
a1) from 30 to 70 wt.% of a polyol having an OH value of > 700 and
a2) from 70 to 30 wt.% of a polyol having an OH value of ≤ 700
and from 5 to 45 wt.% of a mixture b) of mould release agents consisting of
b1) from 60 to 95 wt.% of salt-like release agents based on fatty-acid salts of fatty acids having more than 10 C atoms and N-dimethyl-1,3-propylenediamine, octylamine, oleylamine, dodecylamine, N-dimethylethanolamine, N-methyldiethanolamine, tetraethoxy- and tetraoxyethylenediamine as well as amines of fatty acids and N-methyldiethylenetriamine, N-dimethylethylenediamine or triethylenetriamine and
b2) from 5 to 40 wt.% of release agents containing amide functions or urethane-NH functions and lacking a salt-like character, based on reaction products of polyisocyanates with esters of 1 mol of pentaerythritol and 3 mol of oleic acid and/or tall-oil fatty acid as well as esters of fatty alcohols and fatty acids, fatty-acid esters of monohydric and polyhydric alcohols, esters of fatty acids and amino alcohols
and optionally other auxiliary substances c).

2. Polyol mixtures according to claim 1, characterised in that the polyol mixture a) consists of
a1) from 40 to 65 wt.% of a polyol having an OH value of > 700 and
a2) from 60 to 35 wt.% of a polyol having an OH value of ≤ 700
and the mixture b) of mould release agents consists of
b1) from 70 to 90 wt.% of salt-like release agents according to claim 1, and
b2) from 10 to 30 wt.% of release agents containing amide functions or urethane-NH functions and lacking a salt-like character, according to claim 1.

3. Polyol mixtures according to claim 1 or 2, characterised in that they contain from 70 to 88 wt.% of a polyol mixture a) and from 12 to 30 wt.% of a mixture b) of internal mould release agents and optionally other auxiliary substances c).

4. Polyol mixtures according to claim 1, characterised in that they contain water, stabilisers, catalysts et cetera, as auxiliary substances c).

5. The use of the polyol mixtures according to claims 1 to 4 together with polyisocyanates in the production of polyurethane plastics in reaction-injection moulding processes.

## Revendications

1. Mélanges de polyols contenant des mélanges d'agents de démoulage internes, caractérisés en ce qu'ils contiennent essentiellement
à concurrence de 55 à 95% en poids, un mélange de polyols a)
constitué par
a1) à concurrence de 30 à 70% en poids, un polyol dont l'indice OH est >700 et
a2) à concurrence de 70 à 30% en poids, un polyol dont l'indice OH est ≤700, et
à concurrence de 5 à 45% en poids, un mélange d'agents de démoulage b) constitué par
b1) à concurrence de 60 à 95% en poids, des agents de démoulage salins à base de sels d'acides gras obtenus à partir d'acides gras contenant plus de 10 atomes de carbone et de N-diméthylpropylènediamine-1,3, d'octylamine, d'oléylamine, de dodécylamine, de N-diméthyléthanolamine, de N-méthyldiéthanolamine, de tétraéthoxy- et tétraoxyéthylènediamine et d'amines constituées par des acides gras et de la N-méthyldiéthylènetriamine, de la N-diméthyléthylènediamine ou de la triéthylènetétramine, et
b2) à concurrence de 5 à 40% en poids, des agents de démoulage possédant des fonctions NH amidiques ou uréthaniques, exempts de caractère salin, à base de produits réactionnels de polyisocyanates avec des esters constitués par 1 mole de pentaérythritol et par 3 moles d'acide oléique et/ou d'acides gras de tallol, et avec des esters constitués par des alcools gras et des acides gras, des esters d'acides gras d'alcools mono- et polyvalents, des esters constitués par des acides gras et des aminoalcools,
et éventuellement d'autres adjuvants c).

2. Mélanges de polyols selon la revendication 1, caractérisés en ce que le mélange de polyols a) est constitué par
a1) à concurrence de 40 à 65% en poids, un polyol dont l'indice OH est >700 et
a2) à concurrence de 60 à 35% en poids, un polyol dont l'indice OH est ≤700,
et le mélange d'agents de démoulage b) est constitué par
b1) à concurrence de 70 à 90% en poids, des agents de démoulage salins selon la revendication 1, et
b2) à concurrence de 10 à 30% en poids, des agents de démoulage possédant des fonctions NH amidiques ou uréthaniques, exempts de caractère salin, selon la revendication 1.

3. Mélanges de polyols selon la revendication 1 ou 2, caractérisés en ce qu'ils contiennent, à raison de 70 à 80% en poids, un mélange de polyols a) et à raison de 12 à 30% en poids, un mélange d'agents de démoulage internes b), et éventuellement d'autres adjuvants c).

4. Mélanges de polyols selon la revendication 1, caractérisés en ce qu'ils contiennent, à titre d'adjuvants c), de l'eau, des stabilisateurs, des catalyseurs, etc.

5. Utilisation des mélanges de polyols selon les revendications 1 à 4, conjointement avec des polyisocyanates dans la préparation de matières synthétiques de polyuréthanne dans un procédé de moulage réactif par injection pour la fabrication d'éléments moulés.
